# EUROPEAN PATENT APPLICATION

(11) **EP 4 290 645 A1**
(43) Date of publication of application: **13.12.2023**
(21) Application number: 22749966.2
(22) Date of filing: 28.01.2022
(51) Int. Cl.: H01M 10/42, H01M 50/581, H01M 50/586, H01M 4/62, H01M 4/13, H01M 10/052, H01M 4/02

(54) **ELECTRODE FOR RECHARGEABLE LITHIUM BATTERY AND RECHARGEABLE LITHIUM BATTERY COMPRISING SAME**

(30) Priority: 02.02.2021 KR 20210014969
(71) Applicant: Samsung SDI Co., Ltd., Yongin-si, Gyeonggi-do 17084 (KR)
(72) Inventor: AN, Hoyong, Yongin-si, Gyeonggi-do 17084 (KR); KIM, Suhyun, Yongin-si, Gyeonggi-do 17084 (KR)
(74) Representative: Marks & Clerk LLP
(86) International application number: PCT/KR2022/001556
(87) International publication number: WO 2022/169216

(57) **Abstract**

The present invention relates to an electrode for a rechargeable lithium battery and a rechargeable lithium battery comprising same, the electrode for a rechargeable lithium battery comprising a current collector, and active material layer positioned on the current collector, and a safety functional layer that is positioned inside the active material layer as a separate layer and comprises a thermally expandable polymer.

## Description

### TECHNICAL FIELD

It relates to an electrode for a rechargeable lithium battery and a rechargeable lithium battery including the same.

### BACKGROUND ART

Rechargeable lithium batteries having high energy density and that are easy to carry are mainly used as a driving source of mobile information terminals such as mobile phones, notebooks, and smartphones. Recently, studies on using a rechargeable lithium battery having high energy density as a power source for storage power or a power source for driving hybrid automobiles or electrical vehicles have actively progressed.

One of the main investigation issues on the rechargeable lithium batteries is to improve the safety of rechargeable batteries. For example, when the rechargeable lithium battery generates heat due to an internal short-circuit, an overcharge, an overdischarge, and the like, to cause a decomposition reaction of the electrolyte and thermal runway, pressure inside of the battery rapidly increases, thereby causing explosion of the battery.

Among them, when an internal short-circuit occurs in a rechargeable lithium battery, high electrical energy stored in each electrode is instantly conducted in the short-circuited positive and negative electrodes, and the risk of explosion is very high. Since such an explosion may cause fatal damage to the user in addition to simply damaging the rechargeable lithium battery, it is urgent to develop a technology that may improve the stability of the safety of the rechargeable lithium battery.

### TECHNICAL PROBLEM

One embodiment provides an electrode for a rechargeable lithium battery preventing overheating or explosion of the battery by increasing the internal resistance of a battery when the temperature of the battery is increased.

Another embodiment provides an electrode for a rechargeable lithium battery securing thermal safety and physical safety, while the high-capacity or high-power battery is realized.

Another embodiment provides a rechargeable lithium battery including the electrode.

### TECHNICAL SOLUTION

One embodiment provides an electrode for a rechargeable lithium battery including a current collector, an active material layer positioned on the current collector, and a safety functional layer positioned inside the active material layer as a separated layer and including a thermal expandable polymer.

Another embodiment provides a rechargeable lithium battery including the electrode, a separator, and an electrolyte.

### ADVANTAGEOUS EFFECTS

The electrode for a rechargeable lithium battery and a rechargeable lithium battery including the same according to one embodiment may prevent overheating or explosion by increasing internal resistance at the increase in temperature of the battery, and may generate a high-capacity or high-power battery and secure thermal and physical safety.

### BRIEF DESCRIPTION OF THE DRAWING

FIG. 1 is a schematic drawing illustrating the rechargeable lithium battery according to one embodiment.
FIG. 2 and FIG. 3 are images taken with a field emission scanning electron microscope of the cross-section of the negative electrode according to Example 1.
FIG. 4 is a graph showing the resistance variation of the electrodes according to examples and comparative examples depending on temperatures.
FIG. 5 is a graph showing capacity retention at a room temperature of the cells according to examples and comparative examples.
FIG. 6 is a graph showing capacity retention at a high temperature of the cells according to examples and comparative examples.
FIG. 7 is an image showing evaluating the penetration safety of the cell according to Comparative Example 4.
FIG. 8 is an image showing evaluating the penetration safety of the cell according to Example 1.
FIG. 9 is an image showing the thermal runaway safety of the cell according to Comparative Example 4.
FIG. 10 is an image showing the thermal runaway safety of the cell according to Example 1.

### MODE FOR INVENTION

Herein, the detailed embodiments will be more fully described in order to be readily performed by one that is ordinarily skilled in the related art. However, the present invention may be embodied in many different forms and is not to be construed as limited to the example embodiments set forth herein.

Terms used in the specification is used to explain embodiments, but are not intended limit the present invention. Expressions in the singular include expressions in plural unless the context clearly dictates otherwise.

The term "combination thereof may include a mixture, a laminate, a complex, a copolymer, an alloy, a blend, a reactant of constituents.

The term "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

The drawings show that the thickness is enlarged in order to clearly show the various layers and regions, and the same reference numerals are given to similar parts throughout the specification. When an element, such as a layer, a film, a region, a plate, and the like is referred to as being "on" or "over" another part, it may include cases where it is "directly on" another element, but also cases where there is another element in between. In contrast, when an element is referred to as being "directly on" another element, there are no intervening elements present.

In addition, herein, "layer" includes a shape totally formed on the entire surface or a shape partial surface, when viewed from a plane view.

In one embodiment, an electrode for a rechargeable lithium battery including a current collector, an active material layer positioned on the current collector, and a safety functional layer positioned inside the active material layer and including a thermal expandable polymer.

The safety functional layer may be presented as a layer substantially parallel to the current collector inside the active material layer.

The electrode for the rechargeable lithium battery may be, for example, a structure including a current collector, a lower active material layer on the current collector, a safety functional layer on the lower active material layer, and an upper active material layer on the safety functional layer. That is, the electrode for the rechargeable lithium battery may include a structure in the current collector, the lower active material layer, the safety functional layer, and the upper active material layer are stacked in order. Alternatively, the electrode for the rechargeable lithium battery may be an electrode in which the safety functional layer is interposed between the active material layer and the active material layer.

The interposition of the safety functional layer inside the active material layer renders an increase in the electrical resistance when temperature of the battery rises, thereby restricting transfer of lithium ions and electrons and causing difficulty in flowing of a current, so that explosion and overheat of the battery may be suppressed. The safety functional layer does not interrupt the behavior of the battery at a normal situation, and may act as a partial insulation layer to inhibit the overheating of the battery when the temperature of the battery is only increased. Furthermore, the safety functional layer may also refer to a PTC layer (positive temperature coefficient layer).

Conventionally, the investigation in which such a functional layer is interposed between the current collector and the active material layer, or is adopted on the surface of the active material layer, have been researched, or a method of distributing thermal expandable polymer particles inside the active material layer have been suggested. However, the previous two procedures have a shortcoming in which the functional layer is separated in the battery, because it is difficult to secure the adherence of the functional layer. In addition, the aforementioned three procedures, all procedures have been insufficient in securing the thermal safety when they are applied to the active material layer with high conductivity, or high-power, high-density, or high-capacity batteries.

Whereas, although the electrode for the rechargeable lithium battery according to one embodiment is applied to any cases, such as the active material with high conductivity or a high-power battery, a high-density battery, or a high-current battery, may excellently act to break current when the battery is overheated and does not cause separation of the functional layer related to adherence, and thus, the high-power and high-capacity battery may be realized, and the thermal safety and the physical safety may be simultaneously secured.

The thermal expandable polymer included in the safety functional layer refers to a polymer having a property of self-expansion or melting when the heat is applied thereto. When the battery is overheated, such thermal expandable polymer is self-expanded or melted, thereby breaking current and closing passage of ions, so that the ionic conductivity is reduced, and resultantly, the resistance of the battery is increased, and thus, the thermal safety of the battery may be secured.

The thermal expandable polymer is not limited and may be any polymer, as long as it expands or melts at a higher temperature than a room temperature. The thermal expandable polymer may be a polymer which may be expanded at a temperature range of 70 °C to 200 °C, for example, 70 °C to 180 °C, 70 °C to 160 °C, 80 °C to 200 °C, 100 °C to 200 °C, 100 °C to 180 °C, or 100 °C to 160 °C.

Furthermore, the thermal expandable polymer may be a polymer which may be melted at a temperature range of 100 °C to 200 °C, for example, 100 °C to 180 °C, or 110 °C to 170 °C. This means a melting point (Tₘ) of the thermal expandable polymer.

Examples of the thermal expandable polymer may include polyolefin, polystyrene, an ethylene-vinyl acetate copolymer, an ethylene-acrylate copolymer, an ethylene-methacrylate copolymer, polytetrafluoroethylene, polyamide, polyacrylonitrile, thermoplastic elastomer, polyethylene oxide, polyacetal, thermoplastic modified cellulose, polysulfone, a (metha)acrylate copolymer, polymethyl(metha)acrylate, a copolymer thereof, or a combination thereof.

Herein, the polyolefin, for example, may include polyethylene, polypropylene, polymethylpentene, polybutene, a modified product thereof, or a combination thereof. The polyethylene may, specifically, include high density polyethylene (density: 0.94 g/cc to 0.965 g/cc), medium density polyethylene (density: 0.925 g/cc to 0.94 g/cc), low density polyethylene (density: 0.91 g/cc to 0.925 g/cc), very low density polyethylene (density: 0.85 g/cc to 0.91 g/cc), or a combination thereof.

For example, the thermal expandable polymer may include polyethylene, polypropylene, or a combination thereof.

The thermal expandable polymer may be presented in a form of particles. In this case, the thermal expandable polymer particles may have a spherical shape or a sheet shape.

The thermal expandable polymer may have a particle diameter D50 of 50 nm to 10 µm, and for example 50 nm to 8 µm, 50 nm to 5 µm, 50 nm to 3 µm, 50 nm to 1 µm, or 50 nm to 800 nm. When the thermal expandable polymer has the particle diameter within the range, the ion passage may be effectively blocked, even with the small amount of the thermal expandable polymer. The particle diameter of the thermal expandable polymer may refer as an average particle diameter and may mean a diameter of particles where a cumulative volume is 50 volume% in a particle distribution. The particle diameter of the thermal expandable polymer may be measured by a particle size analyzer, or by images taken from electron microscopes such as a SEM, a TEM, or the like. Alternatively, a dynamic light-scattering measurement device is used to perform a data analysis, and the number of particles is counted for each particle size range, and from this, the average particle diameter (D50) value may be easily obtained through a calculation. Meanwhile, if the thermal expandable polymer is a sheet-shaped, the particle diameter may refer as a length of the longest axis which is the maximum length based on the widest surface of the sheet-shaped particle.

The thermal expandable polymer may be included in an amount of 5 wt% to 95 wt% based on 100 wt% of the safety functional layer, for example, 10 wt% to 90 wt%, 20 wt% to 80 wt%, 30 wt% to 70 wt%, or 40 wt% to 60 wt%. When the amount of the thermal expandable polymer is within the range, the safety functional layer may realize excellent current break and ion break, even with a thin thickness.

The safety functional layer may further include a conductive material.

The conductive material may include a carbon material, a metal material, a metal carbide, a metal nitride, a metal silicide, or a combination thereof. The carbon material may be carbon black, graphite, carbon fiber, carbon nanotube (CNT), or a combination thereof. The carbon black may be, for example, acetylene black, ketjen black, channel black, furnace black, lamp black, thermal black, or a combination thereof. The graphite may include natural graphite, artificial graphite, or a combination thereof. The metal material may be metal particles or a metal fiber, such as nickel or the like. The metal carbide may include, for example, WC, B₄C, ZrC, NbC, MoC, TiC, TaC, or a combination thereof, the metal nitride may include TiN, ZrN, TaN, or a combination thereof, and the metal silicide may include, for example, WSi₂, MoSi₂, or a combination thereof.

The conductive material may be included in an amount of 1 wt% to 50 wt% based on 100 wt% of the safety functional layer, for example, 1 wt% to 45 wt%, 1 wt% to 40 wt%, 5 wt% to 40 wt%, 5 wt% to 35 wt%, 10 wt% to 35 wt%, or 15 wt% to 35 wt%. When the amount of the conductive material is within the range, the safety functional layer may act as excellent current break, even if the thickness is thin.

The safety functional layer may further include a binder.

The binder improves binding properties of materials with one another in the safety functional layer and acts to well adhere the safety functional layer between the active material layers. The binder may be a non-water-soluble binder, a water-soluble binder, or a combination thereof.

The non-water-soluble binder may be polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. Alternatively, the water-soluble binder may be an acryl-based binder. The rubber-based binder may be selected from a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be polyethylene oxide, polyvinyl pyrrolidone, polyepichlorohydrin, polyphosphazene, polyacrylamide, poly(N-vinylformamide), polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof. The acryl-based binder may be polyacrylic acid.

When the aqueous binder is used as a binder, a cellulose-based compound may be further used to provide viscosity. The cellulose-based compound includes one or more of carboxymethyl cellulose, hydroxypropyl methyl cellulose, methyl cellulose, or alkali metal salts thereof. The alkali metal may be Na, K, or Li.

The binder may be included in an amount of 1 wt% to 50 wt% based on 100 wt% of the safety functional layer, or for example, 1 wt% to 45 wt%, 1 wt% to 40 wt%, 5 wt% to 40 wt%, 5 wt% to 35 wt%, 10 wt% to 35 wt%, or 15 wt% to 35 wt%. When the amount of the binder is satisfied in the range, the safety functional layer maintains excellent performance and excellent adherence.

The safety functional layer may have a thickness of 0.5 µm to 8 µm, or for example, 0.5 µm to 7 µm, 0.5 µm to 6 µm, 0.5 µm to 5 µm, or 1 µm to 5 µm. When the thickness of the safety functional layer is satisfied in the range, the distance for transferring electrons or ions in the safety functional layer is sufficiently short, so that the battery performances may be uniformly obtained, and simultaneously, flows of ions or current may be effectively broken when the battery is overheated.

In electrode for a rechargeable lithium battery according to one embodiment, the current collector may include one selected from an aluminum foil, a copper foil, a nickel foil, a stainless steel foil, a titanium foil, a nickel foam, a copper foam, a polymer substrate coated with a conductive metal, and a combination thereof, but is not limited thereto.

In addition, the active material layer includes an active material, and may further include a binder and/or a conductive material. The detailed description for the active material layer will be illustrated in each of the positive active material layer and the negative active material layer, as below.

Meanwhile, as described above, the electrode for a rechargeable lithium battery according to one embodiment may include a current collector, a lower active material layer on the current collector, a safety functional layer on the lower active material layer and including a thermal expandable polymer, and an upper active material layer.

In this case, the thickness of the safety functional layer is as described above. The total negative active material layer including the lower active material layer, the safety functional layer, and the upper active material layer may have a thickness of about 30 µm to 300 µm, or for example, 50 µm to 200 µm, or 15 µm to 150 µm. The negative active material layer with the thickness within the range may realize high-capacity and may secure thermal safety and physical safety.

The lower active material layer includes a first active material and the upper active material layer may include a second active material. Herein, the first active material and the second active material may be the same, or may be different from each other. The first active material and the second active material may be suitably selected depending on the desired performance of the battery.

The electrode for the rechargeable lithium battery may be a positive electrode or a negative electrode.

The negative electrode for the rechargeable lithium battery includes a current collector, and a negative active material layer on the current collector and including a negative active material.

The negative active material includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be a carbon-based negative active material, for example, crystalline carbon, amorphous carbon, or a combination thereof. The crystalline carbon may be unspecified, sheet, flake, spherical, or fiber shaped natural graphite or artificial graphite, and the amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative material or a Sn-based negative active material, and the Si-based negative active material may be silicon, a silicon-carbon composite, Si, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like, and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The silicon-carbon composite may be a silicon-carbon composite including a core including crystalline carbon and silicon particles, and an amorphous carbon coating layer on a surface of the core. The crystalline carbon may be artificial graphite, natural graphite, or a combination thereof. The amorphous carbon precursor may be coal pitch, mesophase pitch, petroleum pitch, coal-based oil, petroleum-based heavy oil, or a polymer resin such as a phenol resin, a furan resin, or a polyimide resin. Herein, an amount of silicon may be 10 wt% to 50 wt% based on the total weight of the silicon-carbon composite. In addition, the amount of the crystalline carbon may be 10 wt% to 70 wt% based on the total weight of the silicon-carbon composite, and the amount of the amorphous carbon may be 20 wt% to 40 wt% based on the total weight of the silicon-carbon composite. Furthermore, the amorphous carbon coating layer may have a thickness of 5 nm to 100 nm. The silicon particles may have an average particle diameter D50 of 10 nm to 20 µm. The silicon particles may preferably have an average particle diameter D50 of 10 nm to 200 nm. The silicon particles may be presented in an oxidated state, and herein, an atomic content ratio of Si:O in the silicon particles which indicates the degree of oxidation may be 99:1 to 33:66 by weight ratio. The silicon particles may be SiOₓ particles, and herein, the range of x may be more than 0 and less than 2 in SiOₓ. In the specification, when a definition is not otherwise provided, an average particle diameter (D50) indicates a diameter of particles where a cumulative volume is about 50 volume% in a particle distribution.

The Si-based negative active material or the Sn-based negative active material may be used together with a carbon-based negative active material. When the Si-based negative active material or the Sn-based negative active material and the carbon-based negative active material are mixed and used, the mixing ratio may be a weight ratio of 1:99 to 10:90.
in the negative active material layer, an amount of the negative active material may be 95 wt% to 99 wt% based on the total weight of the negative active material layer.

In one embodiment, the negative active material layer may further include a binder, and optionally, a conductive material. In the negative active material layer, an amount of the binder may be 1 wt% to 5 wt% based on the total weight of the negative active material layer. When the negative active material layer includes a conductive material, the negative active material layer includes 90 wt% to 98 wt% of the negative active material, 1 wt% to 5 wt% of the binder, and 1 wt% to 5 wt% of the conductive material.

The binder improves binding properties of negative active material particles with one another and with a current collector. The binder may be a non-water-soluble binder, a water-soluble binder, or a combination thereof.

The non-water-soluble binder may be polyvinyl chloride, carboxylated polyvinyl chloride, polyvinyl fluoride, an ethylene oxide-containing polymer, an ethylene propylene copolymer, polystyrene, polyvinyl pyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be a styrene-butadiene rubber, an acrylated styrene-butadiene rubber, an acrylonitrile-butadiene rubber, an acrylic rubber, butyl rubber, a fluorine rubber, and a combination thereof. The polymer resin binder may be selected from polyethylene oxide, polyvinyl pyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, or a combination thereof.

When the water-soluble binder is used as a negative electrode binder, a cellulose-based compound may be further used to provide viscosity. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of 0.1 parts by weight to 3 parts by weight based on 100 parts by weight of the negative active material.

The conductive material is included to provide electrode conductivity, and any electrically conductive material may be used as a conductive material unless it causes a chemical change, and examples thereof may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The positive electrode for a rechargeable lithium battery includes a current collector and a positive active material layer on the current collector, and including a positive active material.

The positive electrode includes the positive active material, and may further include a binder and/or a conductive material.

The positive active material may include lithiated intercalation compounds that reversibly intercalate and deintercalate lithium ions. The example of the positive active material may be the compounds represented by one of the following chemical formulae.

LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{α} (0.90 ≤ a ≤1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ ( 0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤0.1 );LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤a ≤1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂(PO₄)₃ (0 ≤ f ≤2); Li _{(3-f)}Fe₂(PO₄)₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and for example, the method may include any coating method such as spray coating, dipping, and the like, but is not illustrated in more detail since it is well-known in the related field.

The positive active material may be at least one of the lithium composite oxide represented by Chemical Formula 1.

[Chemical Formula 1] LiₐM¹_{1-y1-z1}M²_{y1}M³_{z1}O₂

In Chemical Formula 1, 0.9≤a≤1.8, 0≤y1≤1, 0≤z1≤1, 0≤y1+z1<1, and M¹, M² and M³ are each independently one selected from a metal such as Ni, Co, Mn, Al, Sr, Mg, La, or the like, or a combination thereof.

In one embodiment, the M¹ may be Ni, the M² and M³ may be each independently metal such as Co, Mn, Al, Sr, Mg, La, or the like.

In specific one embodiment, the M¹ may be Ni, the M² may be Co, and the M³ may be Mn or Al, but is not limited thereto.

In more specific one embodiment, the positive active material may be a lithium composite oxide represented by Chemical Formula 2.

[Chemical Formula 2] Liₓ₂Ni_{y2}CO_{z2}Al_{1-y2-z2}O₂

In Chemical Formula 2, 0.9≤x2≤1.2, 0.5≤y2≤1, and 0≤z2≤0.5.

An amount of the positive active material may be 90 wt% to 98 wt% based on the total weight of the positive active material layer, and the binder and the conductive material may be each 1 wt% to 5 wt% based on the total weight of the positive active material layer.

The binder improves binding properties of positive active material particles with one another and with a current collector, and the examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change, and examples thereof may be natural graphite, artificial graphite, carbon black, acetylene black, a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may be an aluminum foil, but is not limited thereto.

Another embodiment provides the positive electrode according to one embodiment, a negative electrode, and an electrolyte. Herein, the aforementioned electrode may be a positive electrode and/or negative electrode.

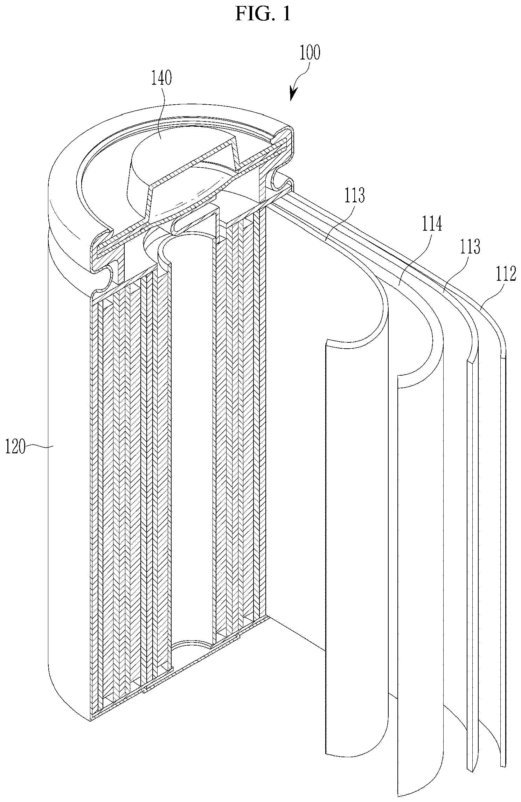

FIG. 1 is a schematic view showing a rechargeable lithium battery according to one embodiment. Referring to FIG. 1, a rechargeable lithium battery 100 according to one embodiment includes a positive electrode 114, a negative electrode 112 positioned facing the positive electrode 114, a separator 113 interposed between the negative electrode 112 and the positive electrode 114, and an electrolyte for a rechargeable lithium battery, impregnating the positive electrode 114, the negative electrode 112, and the separator 113, a battery case 120 housing the electrode assembly, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone and the like. In addition, the alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture, and when the organic solvent is used in a mixture, the mixture ratio may be controlled in accordance with a desirable battery performance and it may be well understood to one of ordinary skill in the related art.

Furthermore, the carbonate-based solvent may include a mixture of a cyclic carbonate and a linear carbonate. Herein, when the mixture of cyclic carbonate and linear carbonate mixed together in a volume ratio of about 1:1 to about 1:9 is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound of Chemical Formula 1.

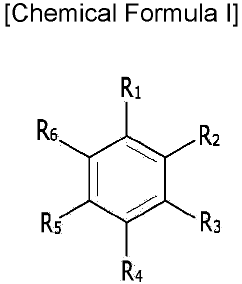

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II, as an additive for improving cycle life.

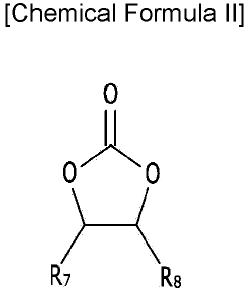

In Chemical Formula II, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R¹⁰ and R¹¹ are not hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. The amount of the additive for improving cycle life may be used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include one or two or more one supporting salts selected from LiPF₆, LiBF₄, LiSbF₆, LiAsFe, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, for example an integer ranging from 1 to 20, LiCl, Lil and LiB(C₂O₄)₂ (lithium bisoxalato borate LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The separator 113 separates the positive electrode 114 from the negative electrode 112 and gives the passage for transferring lithium ions, and may be any one generally-used in a lithium ion battery. That is, an electrolyte having low resistance to the ion transfer of the electrolyte and excellent electrolyte permeability may be used. For example, it may be selected from glass fiber, polyester, TEFLON (tetrafluoroethylene), polyethylene, polypropylene, polytetrafluoroethylene, or a combination thereof, and may be non-woven fabric or woven fabric type. For example, a polyolefin-based polymer separator such as polyethylene, polypropylene, or the like are mainly used in the lithium ion battery, and alternatively, a separator in which a ceramic or a polymer material is coated may also be used in order to secure heat resistance or mechanical strength, or selectively, and a single layer or multi-layer structure may be used.

The rechargeable lithium battery may be classified into a lithium ion battery, a lithium ion polymer battery, or a lithium polymer battery depending on the types of the separator and the electrolyte, may be classified into cylindrical, prismatic, coin-type, or pouch-type depending on the shape, and may be classified into a bulk type or a thin film type depending on a size. The structure and fabrication of such batteries are well-known in the related arts, and thus, are not described in further detail.

### MODE FOR PERFORMING THE INVENTION

Hereinafter, examples of the present invention and comparative examples are described. These examples, however, are not in any sense to be interpreted as limiting the scope of the invention.

### Example 1

### (1) Preparation of negative electrode

97.3 wt% of a negative active material graphite, 0.5 wt% of denka black, 0.9 wt% of carboxymethyl cellulose, and 1.3 wt% of a styrene butadiene rubber were mixed in an aqueous solvent to prepare a negative active material slurry.

50 wt% of polypropylene with an average particle diameter D50 of 300 nm, 25 wt% of carbon black, and 25 wt% of polyacrylic acid as an acryl-based binder were mixed in a water solvent to prepare a safety functional layer slurry with a solid content of 8 wt%.

The negative active material slurry was coated on a copper foil and dried at 60 °C for 10 minutes. The negative active material layer had a thickness of 50 µm after drying. Thereafter, using a micro gravure, the safety functional layer slurry was coated on the active material layer and dried to prepare a safety functional layer. The safety functional layer had a thickness of 3 µm to 4 µm. The negative active material slurry was then coated on the safety functional layer and dried. After drying, the total thickness of the electrode was about 103 µm. The dried electrode was pressurized to prepare a negative electrode.

### (2) Preparation of positive electrode

95 wt% of a LiCoO₂ positive active material, 3 wt% of a polyvinylidene fluoride binder, and 2 wt% of a ketjen black conductive material were mixed in an N-methyl pyrrolidone solvent to prepare a positive active material slurry. The positive active material slurry was coated on an aluminum current collector and dried followed by pressurizing to prepare a positive electrode.

### (3) Fabrication of rechargeable lithium cell

The prepared positive electrode, a separator with a polyethylene/polypropylene multi-layer structure, and the prepared negative electrode were sequentially stacked to fabricate a pouch-type cell, which was then injected with an electrolyte in which 1.0 M LiPF₆ was added to a mixed solvent of ethylene carbonate and diethyl carbonate at a 50:50 volume ratio, thereby fabricating a rechargeable lithium cell.

### Comparative Example 1

A negative electrode and a cell were fabricated by the same procedure as in Example 1, except that a safety functional layer was coated on a surface of a negative active material layer, i.e., the negative active material layer was coated on a current collector, and then the safety functional layer was coated thereon, dried, and pressurized to prepare the negative electrode with a thickness of approximately 103 µm in the preparation of Example1.

### Comparative Example 2

A negative electrode and a cell were fabricated by the same procedure as in Example 1, except that a safety functional layer was coated on a surface of a current collector, i.e., the safety functional layer was coated on a current collector, and then the negative active material layer was coated thereon, dried, and pressurized to prepare the negative electrode with a thickness of approximately 103 µm in the preparation of Example1.

### Comparative Example 3

After mixing 97.3 wt% of a negative active material graphite, 0.5 wt% of denka black, 0.9 wt% of carboxymethyl cellulose, and 1.3 wt% of a styrene butadiene rubber in an aqueous solvent, 5 parts by polypropylene with an average particle diameter D50 of 300 nm based on 100 parts by weight of graphite was added thereto, thereby preparing a negative active material slurry, and the negative active material was coated on a copper foil and dried followed by pressurizing to prepare a negative electrode with a thickness of approximately 103 µm. Thereafter, a cell was fabricated by the same procedure as in Example 1.

### Comparative Example 4

A negative electrode and a cell were fabricated by the same procedure as in Example 1, except that the safety functional layer was not introduced to the negative electrode.

### Evaluation Example 1: Observation of cross-section of electrode

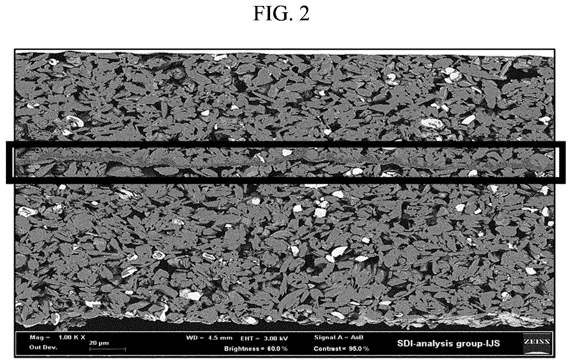

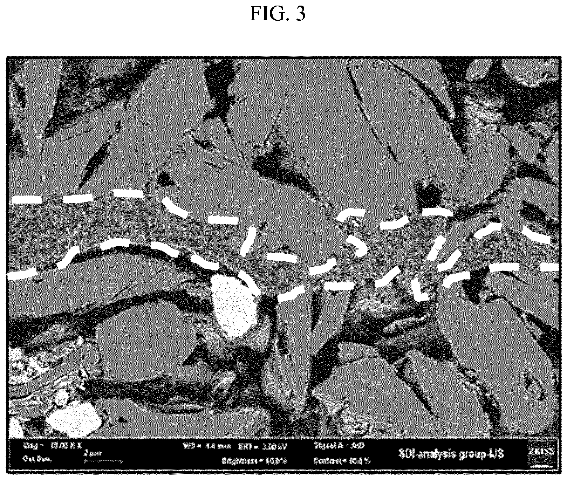

FIG. 2 is an image taken with a field emission scanning electron microscope (FE-SEM) of the cross-section of the negative electrode of Example 1, and FIG. 3 is an enlarged image thereof. In FIG. 2, a portion marked with a solid line, and in FIG. 3, a portion marked with a dotted line, refer to a portion in which safety functional layer is presented

Referring FIG. 2 and FIG. 3, it can be confirmed that the safety functional layer was presented as a layer which was substantially parallel to the current collector in Example 1 inside the active material layer. That is, it can be seen that the cross-section of the electrode in which the safety functional layer interposed between the active material layer and the active material layer may be confirmed.

### Evaluation Example 2: Evaluation of adherence of safety functional layer

The negative electrodes according to Example 1, Comparative Example 1, and Comparative Example 2 were respectively cut to 25 mm X 100 mm to prepare a specimen, and 180 degree peeling strength (N/m) was measured by using a peel strength tester at a peel rate of 100 mm/min and a measurement distance of 25 mm at a temperature of 25 °C, and then the results are shown in Table 1.

**(Table 1)**

| | Peel strength (N/m) |
|---|---|
| Example 1 | 1.95 |
| Comparative Example 1 | 0.32 |
| Comparative Example 2 | 2.53 |

### Evaluation Example 3: Evaluation of resistance according to temperature of electrode

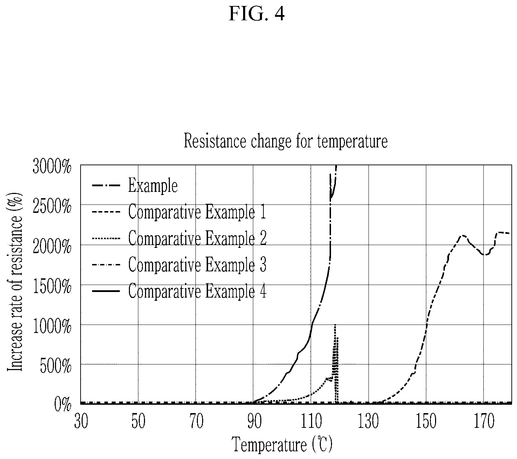

The negative electrodes according to Example 1, Comparative Example 1, Comparative Example 2, Comparative Example 3, and Comparative Example 4 were mounted with a temperature sensor and a resistance meter and placed into a temperature variable chamber, and changes in resistance according to temperature were measured, while the temperature was increased at a speed of 10 °C/min, and then results are shown in FIG. 4.

Referring to FIG. 4, the electrode resistance of Example 1 exhibited surprisingly higher electrode resistance than Comparative Examples 1 to 4 at 90 °C or more. It can be seen from these results that the cell of Example 1 effectively suppressed the paths of electrons and ions in thermal runaway, and thus, the shut-down function may appear early.

### Evaluation Example 4: Evaluation of cycle-life characteristic

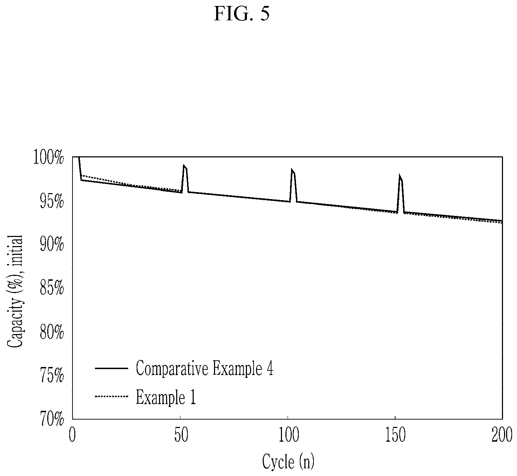

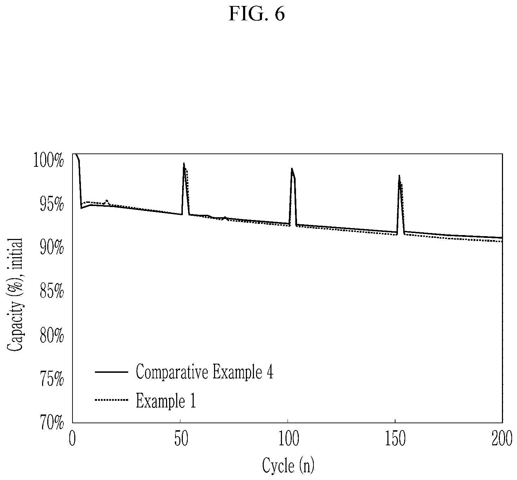

The cells of Example 1 and Comparative Example 4 were constant current charged at room temperature (25 °C) and a high temperature (45 °C) and at a 0.7 C rate until a voltage reached 4.47 V, and then was cut off at a 0.05 C rate under the constant voltage mode, while maintaining them at 4.47 V. Thereafter, until the voltage was reached 3.0 V at discharge, the discharging at a 1 C rate was repeated for 200 cycles. In all charge and discharge cycles, after one charge and discharge cycle, a rest time for 10 minutes was set. The changes in capacity according to cycles were measured, and FIG. 5 is a graph showing capacity changes at a room temperature and FIG. 6 is a graph showing capacity changes at a high temperature.

Referring to FIG. 5 and FIG. 6, the cell of Example 1 exhibited no decreased capacity characteristic and cycle-life characteristic, compared to Comparative Example 4 without the safety functional layer, and thus, the basic battery performances may be maintained. That is, although the cell of Example 1 included the functional layer in the electrode, reductions in adherence, electrical conductivity in the electrode, energy density, and the like rarely occurred, and thus, from these results, it can be seen that reliability of the cell may be maintained.

### Evaluation Example 5: Evaluation of penetration safety

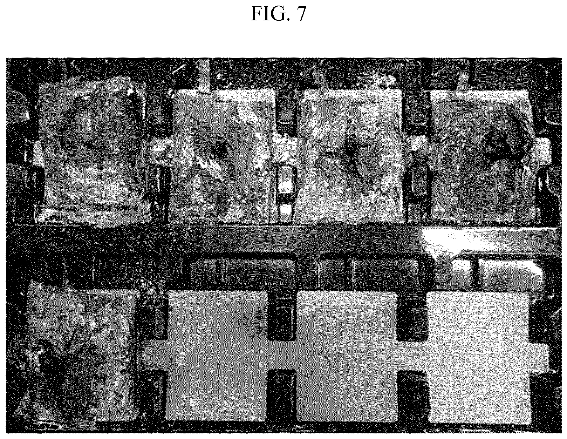

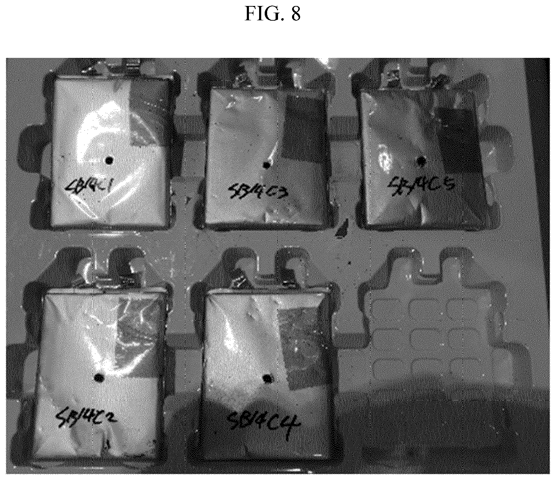

The cells of Example 1 and Comparative Example 4 charged at a 0.7 C rate to 4.47 V, with cut-off at a 0.05 C rate, and after 1 hour, was completely penetrated through the center of the cell using a pin with a diameter of 3 mm at a speed of 150 mm/s, and the result of Comparative Example 4 is shown in FIG. 7 and the result of Example 1 is shown in FIG. 8. In case of Comparative Example 4, all five cells of five sample cells exploded, whereas, in case of Example 1, no cell of five sample cells exploded. The cell of Example 1 includes the safety functional layer inside the negative active material layer, so that the shutdown was occurred early before explosion or firing due to the penetration of the cell, thereby securing the penetration safety.

### Evaluation Example 6: Evaluation of thermal runaway safety

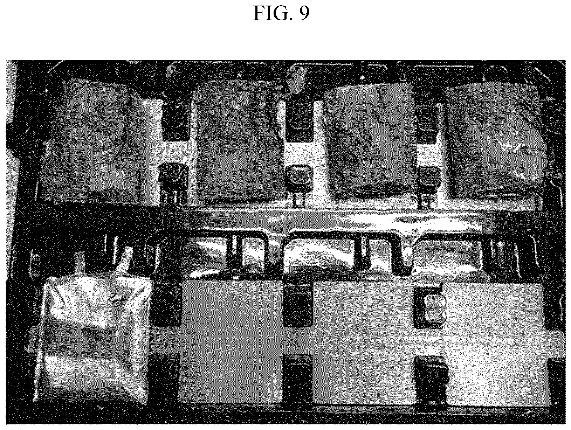

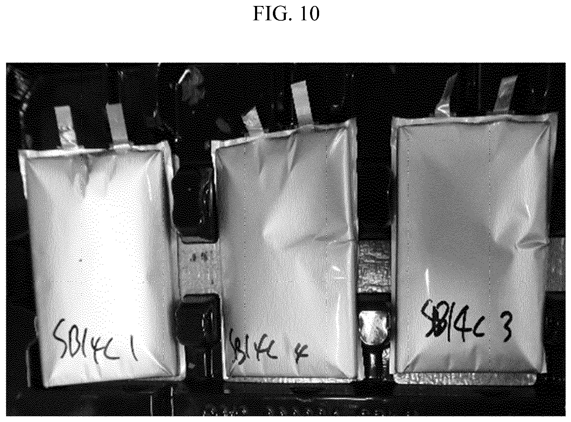

The cells of Example 1 and Comparative Example 4 were charged at a 0.7 C rate to 4.47 V, cut-off at a 0.05 C rate, and stored at a chamber at 134 °C, and the result of Comparative Example 4 is shown in FIG. 9, and the result of Example 1 is shown in FIG. 10.

In case of Comparative Example 4, four cells of five sample cells exploded, whereas, in case of Example 1, no cell of three sample cells exploded. The cell of Example 1 included the safety functional layer inside the negative active material layer so that shut down was occurred early in thermal runaway, thereby securing the thermal safety.

The preferred embodiments are illustrated in more detail, but the patented scope of the present invention is not limited thereto, and various modification and improvements of those skilled in the related art using the basic concepts defined the claims are also within the patented scope of the present invention.

### [DESCRIPTION OF SYMBOLS]

| | | | |
|---|---|---|---|
| 100: | Rechargeable lithium battery | 112: | Negative electrode |
| 113: | Separator | 114: | Positive electrode |
| 120: | Battery case | 140: | Sealing member |

## Claims

1. An electrode for a rechargeable lithium battery, comprising:
a current collector;
an active material layer positioned on the current collector; and
a safety functional layer positioned inside the active material layer as a separator layer and comprising a thermal expandable polymer.

2. The electrode for a rechargeable lithium battery of claim 1, wherein the thermal expandable polymer is a polymer which is expended at 70 °C to 200 °C.

3. The electrode for a rechargeable lithium battery of claim 1, wherein the thermal expandable polymer is a polymer which is melted at 100 °C to 200 °C.

4. The electrode for a rechargeable lithium battery of claim 1, wherein the thermal expandable polymer includes a polyolefin, polystyrene, an ethylene-acetate vinyl copolymer, an ethylene-acrylate copolymer, an ethylene-methacrylate copolymer, polytetrafluoroethylene, polyamide, polyacrylonitrile, a thermoplastic elastomer, polyethylene oxide, polyacetal, thermoplastic modified cellulose, polysulfone, a (metha)acrylate copolymer, polymethyl(metha)acrylate, a copolymer thereof, or a combination thereof.

5. The electrode for a rechargeable lithium battery of claim 4, wherein the polyolefin includes high density polyethylene, medium density polyethylene, low density polyethylene, very low density polyethylene, polypropylene, polymethylpentene, polybutene, a modified product thereof, or a combination thereof.

6. The electrode for a rechargeable lithium battery of claim 1, wherein the thermal expandable polymer has a particle form and has a thermally expandable polymer particle diameter D50 of 50 nm to 10 µm.

7. The electrode for a rechargeable lithium battery of claim 1, wherein the thermal expandable polymer is included in an amount of 5 wt% to 95 wt% based on 100 wt% of the safety functional layer.

8. The electrode for a rechargeable lithium battery of claim 1, wherein the safety functional layer further includes a conductive material.

9. The electrode for a rechargeable lithium battery of claim 8, wherein the conductive material is included in an amount of 1 wt% to 50 wt% based on 100 wt% of the safety functional layer.

10. The electrode for a rechargeable lithium battery of claim 1, wherein the safety functional layer further includes a binder.

11. The electrode for a rechargeable lithium battery of claim 10, wherein the binder is included in an amount of 1 wt% to 50 wt% based on 100 wt% of the safety functional layer.

12. The electrode for a rechargeable lithium battery of claim 10, wherein the binder includes polyethylene oxide, polyvinyl pyrrolidone, polyepichlorohydrin, polyphosphazene, polyacrylamide, poly(N-vinylformamide), polyacrylonitrile, an ethylene propylene diene copolymer, polyvinyl pyridine, chlorosulfonated polyethylene, latex, a polyester resin, an acryl resin, a phenol resin, an epoxy resin, polyvinyl alcohol, and a combination thereof.

13. The electrode for a rechargeable lithium battery of claim 1, wherein the safety functional layer has a thickness of 0.5 µm to 8 µm.

14. The electrode for a rechargeable lithium battery of claim 1, wherein the electrode for the rechargeable lithium battery includes
a current collector,
a lower active material layer positioned on the current collector and including a first active material,
a safety functional layer positioned on the lower active material layer and including a thermal expandable polymer, and
an upper active material layer positioned on the safety functional layer and including a second active material.

15. The electrode for a rechargeable lithium battery of claim 14, wherein the first active material and the second active material are the same.

16. The electrode for a rechargeable lithium battery of claim 14, wherein the first active material and the second active material are different.

17. The electrode for a rechargeable lithium battery of claim 1, wherein the electrode for the rechargeable lithium battery is a negative electrode.

18. A rechargeable lithium battery, comprising:
an electrode of any one of claim 1 to claim 17;
a separator; and
an electrolyte.
